# EUROPEAN PATENT SPECIFICATION

(11) **EP 2 083 463 B1**
(45) Date of publication and mention of the grant of the patent: **27.07.2011**
(21) Application number: 06811940.3
(22) Date of filing: 18.10.2006
(51) Int. Cl.: H01M 6/16, H01M 4/505, H01M 4/525, H01M 4/06, H01M 4/58, H01M 4/485, H01M 4/587, H01M 4/36, H01M 4/40

(54) **LITHIUM PRIMARY BATTERY**
LITHIUM-PRIMÄRBATTERIE
BATTERIE PRIMAIRE AU LITHIUM

(43) Date of publication of application: 29.07.2009
(73) Proprietor: Panasonic Corporation, Kadoma-shi Osaka 571-8501 (JP)
(72) Inventor: HITOMI, Tohru c/o Panasonic Corporation, 1-61 Shiromi 2-chome Chuo-ku Osaka-shi 540-6207 (JP); YAMANAKA, Susumu c/o Panasonic Corporation, 1-61 Shiromi 2-chome Chuo-ku Osaka-shi 540-6207 (JP); FUJII, Shinji c/o Panasonic Corporation, 1-61 Shiromi 2-chome Chuo-ku Osaka-shi 540-6207 (JP); TAKATA, Kenichi c/o Panasonic Corporation, 1-61 Shiromi 2-chome Chuo-ku Osaka-shi 540-6207 (JP); MORIGAKI, Kenichi c/o Panasonic Corporation, 1-61 Shiromi 2-chome Chuo-ku Osaka-shi 540-6207 (JP)
(74) Representative: TBK
(86) International application number: PCT/JP2006/320722
(87) International publication number: WO 2008/047421

(56) References cited:
- WO-A-2007/044355
- WO-A-2007/100999
- JP-A- 08 031 429
- JP-A- 51 092 037
- JP-A- 58 206 061
- JP-A- 58 206 062
- JP-A- 59 103 277
- JP-A- 2005 259 570
- JP-A- 2006 302 593
- US-A1- 2003 129 485

## Description

### Technical Field

The present invention relates to a lithium primary battery including a positive electrode including a fluoride such as graphite fluoride as an active material, a negative electrode, an electrolyte, and a separator, and particularly relates to a lithium primary battery excellent in large-current discharge characteristics at low temperature and high-temperature storage characteristics.

### Background Art

Lithium primary batteries including graphite fluoride as a positive electrode active material and metallic lithium or an alloy thereof as a negative electrode active material have a higher voltage and a higher energy density than those of the conventional aqueous batteries, and exhibit a long shelf life and an excellent stability in a high temperature region. Accordingly, such lithium primary batteries have been used for various applications, such as a main power source for small electronic devices and a backup power source.

In recent years, as electronic devices have become more multifunctional and smaller in size, there has been demand for further improvement in the characteristics of lithium primary-batteries used for a power source thereof. In particular, when used as a main power source for a vehicle- mounted electronic device or as a backup power source, the batteries are required to exhibit good discharge characteristics under an extremely wide temperature range from as low as -40°C to as high as around 125°C.
In such batteries, however, there has been a problem in that at the time of large current discharge, the voltage drops in the early stage of discharge, and after that, the voltage slowly increases; and in particular, in a low temperature environment, the voltage drops severely in the early stage of discharge.

As a method for suppressing the drop in voltage in the early stage of discharge, for example, Patent Document 1 discloses adding a chromium oxide into a positive electrode including graphite fluoride as an active material. In the early stage of discharge, the chromium oxide, which has a discharge potential versus lithium higher than that of the graphite fluoride, preferentially contributes to the discharge. For this reason, the drop in voltage in the early stage of discharge that occurs when graphite fluoride is used as an active material is suppressed. Further, in order to suppress gas generation or decomposition of electrolyte that occurs when a charge current flows in the battery, thereby to improve the resistance to charging, Patent Documents 2 and 3 teach adding into the positive electrode including graphite fluoride as an active material, titanium dioxide or a vanadium oxide as a metal oxide being capable of absorbing and desorbing lithium ions and reacting preferentially to or simultaneously with the graphite fluoride in the early stage of discharge. Furthermore, as a method of achieving a higher discharge voltage in a secondary battery, Patent Document 4 suggests using a transition metal oxide in a positive electrode and lithium titanate in a negative electrode.

Patent document WO 2007/044355 A2 discloses a new cathode design used in an electrochemical cell. This electrochemical cell comprises an anode of an alkali metal, a cathode of a first cathode active material having a relatively low energy density, but a relatively high rate capability contacted to outer major sides of a first and a second cathode current collectors and a second cathode active material having a relatively high energy density, but a relatively low rate capability, and a non-aqueous electrolyte activating the anode and the cathode.
Patent Document 1: Japanese Laid-Open Patent Publication No. Sho 58-161260
Patent Document 2: Japanese Laid-Open Patent Publication No. Sho 58-206061
Patent Document 3: Japanese Laid-Open Patent Publication No. Sho 58-206062
Patent Document 4: Japanese Laid-Open Patent Publication No. Hei 6-275263
Patent Document 5: US2003/0129485 A1

### Disclosure of the Invention

### Problem To be Solved by the Invention

According to the method as disclosed in Patent Document 1, however, the effect of suppressing the drop in voltage that occurs in the early stage of discharge can only be achieved in the very early stage when discharged in a low temperature environment. In addition, the discharge characteristics tend to deteriorate after storage at high temperature. This is presumably attributable to the use of a material having a discharge potential versus lithium higher than that of graphite fluoride, which facilitates the decomposition of electrolyte. Moreover, according to the method as described in Patent Document 2 and 3, since a material having a discharge potential versus lithium higher than that of graphite fluoride is used, the electrolyte may also be decomposed during storage at high temperature, resulting in a deterioration of the discharge characteristics.

In order to solve the conventional problems as described above, the present invention intends to provide a lithium primary battery excellent in large-current discharge characteristics in a low temperature environment without sacrificing the high-temperature storage characteristics.

### Means for Solving the Problem

The lithium primary battery of the present invention includes the features according to claim 1.

It is preferable that the metal oxide is at least one selected from the group consisting of Li₄Ti₅O₁₂ and LiV₂O₄.
It is preferable that a composite material of the fluoride and the metal oxide is formed.
It is preferable that the electrolyte includes an organic solvent and a salt dissolved in the organic solvent, the organic solvent is at least γ-butyrolactone, and the salt is lithium tetrafluoroborate.

As such, due to the presence of a metal oxide capable of charging and discharging lithium ions, namely, a metal oxide with excellent lithium ion conductivity, in the positive electrode, the overvoltage at the positive electrode during discharge is reduced and the large-current discharge characteristics in a low temperature environment are improved. Moreover, since a metal oxide whose potential during discharge is lower than that of the fluoride, the deterioration in the discharge characteristics due to the decomposition of electrolyte during storage at high temperature can be suppressed.

### Effect of the Invention

According to the present invention, it is possible to provide a highly reliable lithium primary battery excellent in large-current discharge characteristics in a low temperature environment without sacrificing the high-temperature storage characteristics.

### Brief Description of the Drawing

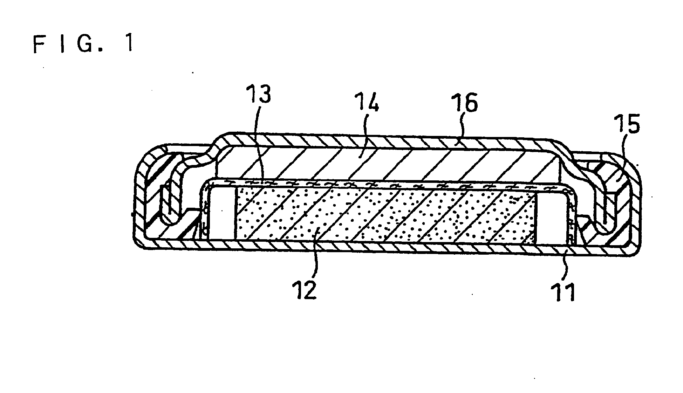

FIG. 1 is a longitudinal cross-sectional view of a coin battery according to an example of the lithium primary battery of the present invention.

### Best Mode for Carrying Out the Invention

The present invention relates to a lithium primary battery comprising a positive electrode including a fluoride as a positive electrode active material, a negative electrode including metallic lithium or a lithium alloy as a negative electrode active material, a separator interposed between the positive electrode and the negative electrode, and an electrolyte. The positive electrode further includes a metal oxide being capable of absorbing and desorbing lithium ions, having a spinel structure, and having a discharge potential versus lithium lower than that of the fluoride.

The discharge reaction of lithium primary batteries is a reaction in which lithium ions are dissolved from the negative electrode containing lithium to the electrolyte and intercalated into the positive electrode active material. In the process of discharge reaction, there exists resistance such as electrode resistance, resistance to ion migration through the electrolyte in the electrodes and the separator, and reaction resistance associated with the charge transfer between the electrodes. The overvoltage due to these resistive components varies depending on the conditions, such as the structure of the electrode, the configuration of the battery, and the ambient temperature and current density at the time of discharge. If the overvoltage is reduced, the discharge characteristics can be improved.

Lithium ions to be intercalated into the fluoride are considered to be supplied from the interface between the positive electrode active material particles and the electrolyte in the positive electrode. In the lithium primary battery of the present invention, since a metal oxide being capable of absorbing and desorbing lithium and having excellent lithium ion conductivity is included in the positive electrode, sites from which lithium ions are supplied to the fluoride are increased, and thus the overvoltage at the positive electrode that occurs during discharge can be reduced. This consequently improves the large-current discharge characteristics in a low temperature environment.

However, the metal oxide with lithium ion conductivity, if the discharge potential versus lithium thereof is higher than that of the fluoride, will allow the electrolyte to be decomposed during storage at high temperature, causing the discharge characteristics to deteriorate. Consequently, the high-temperature storage characteristics tend to deteriorate. As a result of intensive studies, the present inventors have found that this phenomenon is evident when using a positive electrode active material that does not allow the reaction to proceed in the charging direction, such as graphite fluoride. Although the precise reason is unclear, it is presumed that a decomposing reaction of the electrolyte is facilitated on the surface of the metal oxide when using the positive electrode active material that does not allow the reaction to proceed in the charging direction. Therefore, in order to inhibit the decomposition of the electrolyte during storage at high temperature, it is important that the metal oxide to be included in the positive electrode has a discharge potential versus lithium lower than that of the fluoride.

Moreover, in principle, the most part of the metal oxide having a discharge potential versus lithium lower than that of the fluoride does not contribute to the discharge reaction until the discharge reaction of the fluoride proceeds to such an extent that the discharge potential of the positive electrode becomes equal to that of the metal oxide. It should be noted, however, that at the surface of the electrode and the like, namely, at the portion where the potential of the fluoride is partially reduced, the discharge reaction in which the metal oxide absorbs lithium may occur.
When the potential at the surface of the fluoride becomes uniform due to the dispersion of lithium ions, a reaction in which the metal oxide desorbs lithium ions occurs (i.e., a reaction corresponding to the charge reaction in a secondary battery), and the desorbed lithium ions will be used in the discharge reaction of the fluoride. Since the fluoride receives part of lithium ions via the metal oxide, the metal oxide is regarded as acting as a donor of lithium ions.

In the case where, into a positive electrode including a fluoride, the metal oxide having a discharge potential versus lithium lower than that of the fluoride is added, a local battery is formed at the positive electrode, and a charge reaction in which the metal oxide desorbs lithium ions occurs depending on the potential of the fluoride, resulting in an overcharged state. For this reason, the metal oxide needs to have durability at least against the potential of the fluoride to be contained in the positive electrode.
In addition, since the metal oxide absorbs or desorbs lithium as described above, it is not preferred to use, as the metal oxide as used herein, a material such as one that will produce a by-product or one whose skeleton is changed when lithium is absorbed thereto or desorbed therefrom.
With this regard, the present inventors conducted intensive studies on metal oxides and found that a metal oxide having a spinel structure is effective in dramatically improving the discharge characteristics and particularly effective in maintaining the effect of suppressing the reduction in potential during discharge for a long period of time.

As the foregoing metal oxide having a spinel structure, a metal oxide containing Ti, V, Al, Mn, Fe, Co, or Ni is used. Alternatively, a metal oxide obtained by replacing a part of the above-listed metal oxide with a different element may be used. Two or more of these metal oxides may be used in combination.
The foregoing metal oxide is preferably at least one selected from lithium titanate and lithium vanadate, and is more preferably LiV₂O₄ or Li₄Ti₅O₁₂. In particular, when lithium titanate is used, the voltage in a large-current discharge at low temperature is improved, and in addition, the high-temperature storage characteristics are remarkably improved. Although the precise reason for this is unclear, this is presumably attributable to the stability in structure during absorption and desorption of lithium within a wide potential window of the lithium titanate, and the discharge potential versus lithium of the titanium oxide extremely lower than that of the graphite fluoride.
The effects as described above are more evident when in the X-ray diffraction pattern of the metal oxide having a spinel structure obtained by X-ray diffractometry using Cu as a target, the interplanar spacings corresponding to the peaks are 4.84 Å, 2.53 Å, 2.09 Å, and 1.48 Å.

Further, the content of the metal oxide in the positive electrode is 0.5 to 50 parts by weight per 100 parts by weight of the fluoride. More preferably, the content of the metal oxide in the positive electrode is 20 parts by weight per 100 parts by weight of the fluoride, in the case of which the effect of improving the low-temperature characteristics is evident. When the content of the metal oxide in the positive electrode is less than 0.5 parts by weight per 100 parts by weight of the fluoride, the effect due to the metal oxide is small. On the other hand, when the content of the metal oxide in the positive electrode is more than 50 parts by weight per 100 parts by weight of the fluoride, the charge transfer resistance at the positive electrode is increased, and the foregoing effect becomes small.

In the positive electrode, preferably, the fluoride and the metal oxide are uniformly mixed. In mixing, any known method, such as dry mixing and wet mixing, may be used.
More preferably, the fluoride and the metal oxide used for the positive electrode are present in the positive electrode in such a state that a composite material of the fluoride and the metal oxide is formed. This composite material can be obtained by applying mechanical energy to a mixture of fluoride powder and metal oxide powder. The method of applying mechanical energy is exemplified by mechanochemical processing in which mechanical compression and shearing forces are exerted. For example, it is preferable to simultaneously apply compression force and shearing force to the mixture in which core particles of fluoride and fine particles of metal oxide are present in a mixed state, so that the fine particles of metal oxide are embedded in the core particles of fluoride. In the case of forming the fluoride and the metal oxide into a composite material, the effect of the present invention as described above is more evident than in the case of simply mixing the fluoride and the metal oxide. As for the state of a composite material, primary particles of the fine particles of metal oxide are preferably embedded in the core particles of fluoride, but secondary particles of the fine particles of metal oxide may be embedded in the core particles of fluoride.
The particle size of the core particles of fluoride is, for example, 5 to 20 µm; and the particle size of the fine particles of metal oxide is, for example, 1 to 10 µm.

As for the apparatus used for forming a composite material by mechanochemical processing, any apparatus may be used, with no particular limitation on the structure and type, as long as compression force and shearing force are simultaneously applied to a precursor of the composite material present in the gap between the surfaces of the core particles to be combined with the precursor. For example, a kneader such as a compression kneader or a two-roll kneader, a rotary ball mil, Hybridization System (available from Nara Machinery Co., Ltd.), Mechano Micros (available from Nara Machinery Co., Ltd.), Mechanofusion System (available from Hosokawa Micron Corporation), and the like are used.

As the fluoride included in the positive electrode active material graphite fluoride or a graphite fluoride intercalation compound is used. In view of the long-term reliability, safety, and high-temperature stability, the fluoride is preferably a graphite fluoride represented by the general formula (CFₓ)ₙ, where 0 < x = 1. The graphite fluoride is composed only of (CF)ₙ or (C₂F)ₙ, or composed of a mixture of these, and may contain unreacted carbon.
Examples of a material used as a starting material of the graphite fluoride include thermal black, acetylene black, furnace black, vapor phase grown carbon fiber, pyrolytic carbon, natural graphite, artificial graphite, mesophase microbead, petroleum coke, coal coke, petroleum- based carbon fiber, coal-based carbon fiber, charcoal, activated carbon, glassy carbon, rayon-based carbon fiber, PAN-based carbon fiber, carbon nanotube, and fullerene.

In addition to the foregoing positive electrode active material, the positive electrode may include, for example, a conductive material and a binder.
As the conductive material, any material may be used as long as the material is an electronically conductive material applicable for a lithium primary battery, examples of which include graphites, such as natural graphite (flake graphite etc.), artificial graphite, and expanded graphite; carbon blacks, such as acetylene black, Ketjen Black, channel- black, furnace black, lamp black, and thermal black; conductive fibers, such as carbon fiber and metal fiber; metal powders, such as copper powder and nickel powder; and organic conductive materials, such as a polyphenylene derivative. These may be used alone or in combination of two or more.

As the binder, thermoplastic resin, thermoset resin, or the like may be used, examples of which include polyethylene, polypropylene, polytetrafluoroethylene (PTFE), polyvinylidene fluoride (PVDF), styrene-butadiene rubber (SBR), tetrafluoroethylene-hexafluoropropylene copolymer (FEP), tetrafluoroethylene-perfluoroalkyl vinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethyl vinyl ether-tetrafluoroethylene copolymer, ethylene-acrylic acid copolymer or a (Na⁺)ion-cross-linked copolymer thereof, ethylene-methacrylic acid copolymer or a (Na⁺)ion-cross-linked copolymer thereof, ethylene-methyl acrylate copolymer or a (Na⁺)ion-cross-linked copolymer thereof, and ethylene-methyl methacrylate copolymer or a (Na⁺)ion-cross-linked copolymer thereof. These may be used alone or in combination of two or more.

As the negative electrode active material included in the negative electrode, for example, metallic lithium, or alternatively a lithium alloy containing aluminum, tin, magnesium, indium, or calcium at a level of several percent may be used.

As the electrolyte an organic electrolyte comprising an organic solvent and a salt dissolved in the organic solvent is used.
As the organic solvent, any organic solvent applicable for a lithium primary battery may be used, examples of which include γ-butyrolactone (γ-BL), propylene carbonate (PC), ethylene carbonate (EC), butylene carbonate (BC), vinylene carbonate (VC), 1,2-dimethoxyethane (DME), 1,2-diethoxy ethane (DEE), 1,3-dioxolane, dimethyl carbonate (DMC), diethyl carbonate (DEC), ethyl methyl carbonate (EMC), dipropyl carbonate (DPC), N,N-dimethylformamide, tetrahydrofuran, 2-methyltetrahydrofuran, dimethylsulfoxide, 1,3-dioxolane, formamide, acetamide, dimethylformamide, dioxolane, acetonitrile, propylnitrile, nitromethane, ethyl monoglyme, phosphotriester, trimethoxy methane, a dioxolane derivative, sulfolane, methyl sulfolane, 1,3-dimethyl-2-imidazolidinone, 3-methyl-2-oxazolidinone, a propylene carbonate derivative, a tetrahydrofuran derivative, ethyl ether, 1,3-propane sultone, anisole, dimethylsulfoxide, and N-methylpyrrolidone. These may be used alone or in combination of two or more. Among these, γ-butyrolactone (γ-BL) is preferred because of its stability over a wide temperature range and because salt is easily dissolved therein. Alternatively, in order to improve the ion conductivity at low temperature, γ-BL may be used in combination with a solvent with low boiling point such as DME.

As the salt, for example, lithium hexafluorophosphate (LiPF₆), lithium tetrafluoroborate (LiBF₄), lithium trifluoromethane sulfonate (LiCF₃SO₃), lithium bis(pentafluoroethyl sulfonyl)imide (LiN(SO₂C₂F₅)₂), lithium perchlorate (LiClO₄), LiAlCl₄, LiSbF₆ , LiSCN, LiCl , LiCF₃CO₂, LiAsF₆, lithium lower aliphatic carboxylate, LiCl, LiBr, LiI, chloroborane lithium, and lithium tetraphenylborate may be used. These may be used alone or in combination of two or more.
In order to obtain a lithium primary battery excellent in stability at high temperature, it is preferable to include at least γ-butyrolactone as the solvent and lithium tetrafluoroborate as the salt in the electrolyte.

In place of the organic electrolyte, a solid electrolyte may be used. The solid electrolyte is classified into inorganic solid electrolyte and organic solid electrolyte.
As the inorganic solid electrolyte, a lithium nitride, a lithium halide, or a lithium oxyacid salt may be used, examples of which include, Li₄SiO₄, Li₄SiO₄-LiI-LiOH, xLi₃PO₄-(1-x)Li₄SiO₄, Li₂SiS₃, Li₃PO₄-Li₂S-SiS₂, and a phosphorus sulfide compound.
As the organic solid electrolyte, for example, polyethylene oxide, polypropylene oxide, polyvinyl alcohol, a polyvinylidene fluoride, polyphosphazene, polyethylene sulfide, and polyhexafluoropropylene, and derivatives of these may be used. These may be used alone or in combination of two or more.

As the separator, any separator applicable for a lithium battery may be used without particular limitation. Examples of the separator include non-woven fabric made of polypropylene, non-woven fabric made of polyphenylene sulfide, and microporous film of an olefin-based resin such as polyethylene or polypropylene. These may be used alone or in combination of two or more.

The shape of the battery is not particularly limited. The battery may be of a coin type, button type, sheet type, laminated type, cylindrical type, flat type, prismatic type, a large size for use in an electric vehicle or the like, and others.

### Examples

Examples of the present invention are specifically described below but not limited to these examples.

### «Example 1 »

A coin battery as shown in FIG. 1 was produced as the lithium primary battery according to the present invention in the following manner. FIG. 1 is a longitudinal cross-sectional view of a coin battery according to an example of the lithium primary battery of the present invention.

### (1) Production of Positive Electrode

Graphite fluoride having a mean particle size of 15 µm and fine particles of LiV₂O₄ having a mean particle size of 10 µm (available from Kojundo Chemical Laboratory Co., Ltd.), the graphite fluoride and LiV₂O₄ serving as the positive electrode active material, acetylene black serving as the conductive material, and SBR serving as the binder were dry-, mixed in a weight ratio of 100:10:15:6 on a solid matter basis in Micro-Speed Mixer (available from Takara Koki Co. Ltd.,). As the graphite fluoride, fluorinated petroleum coke was used. To the resultant mixture, a mixed solution of water and ethanol was added and then sufficiently kneaded in Shinagawa Universal Mixer (available from Shinagawa Kogyo K.K.), to give a material mixture. This material mixture was dried at 100°C, and compress-molded using a predetermined die in a hydraulic press machine, whereby a disc-shaped positive electrode 12 having a thickness of 600 µm and a diameter of 17 mm was produced.

### (2) Assembly of Battery

A disc-shaped negative electrode 14 made of metallic lithium having a thickness of 200 µm and a diameter 18 mm was press-fitted into a negative electrode case 16 made of stainless steel with a insulating packing 15 made of polyethylene mounted thereon. After the positive electrode 12 was placed on the negative electrode 14 press-fitted into the negative electrode case 16, with a separator 13 interposed between the positive electrode and the negative electrode, an organic electrolyte was injected into the separator 13. Here, as the separator 13, a polypropylene non-woven fabric was used; and as the organic electrolyte, γ-BL dissolving 1 mol/L LiBF₄ was used. These components thus assembled was housed in a positive electrode case 11 made of stainless steel, and the edge of the opening end of the positive electrode case 11 was crimped onto the periphery of the negative electrode case 16 with the insulating packing 15 interposed therebetween, to seal the positive electrode case 11-. In the manner as described above, a battery with a capacity of 110 mAh (diameter: 23 mm, and height: 20 mm) was fabricated.

### «Comparative Example 1»

A battery was fabricated in the same manner as in Example 1 except that LiV₂O₄ was not added in producing the positive electrode.

### «Comparative Example 2»

A battery was fabricated in the same manner as in Example 1 except that V₂O₅ having a mean particle size of 10 µm (VT-2, available from Taiyo Koko Co., Ltd.) was used in place of LiV₂O₄ in producing the positive electrode.

### <<Comparative Example 3»

A battery was fabricated in the same manner as in Example 1 except that TiO₂ having a mean particle size of 10 µm (rutile-type TiO₂, available from Kojundo Chemical Laboratory Co., Ltd.) was used in place of LiV₂O₄ in producing the positive electrode.

### «Example 2»

The same graphite fluoride and lithium vanadate as used in Example 1 were subjected to mechanochemical processing in Mechanofusion System available from Hosokawa Micron Corporation at a rotation rate of 2000 rpm for 30 minutes, whereby a composite material composed of graphite fluoride and lithium vanadate was prepared. To the resultant composite material, the same conductive material and binder as used in Example 1 were added and dry-mixed. At this time, the mixing ratio of the materials included in the positive electrode was the same as that in Example 1. To the mixture thus obtained, a water-ethanol mixed solution was added and sufficiently kneaded in Shinagawa Universal Mixer (available from Shinagawa Kogyo K.K.), to give a material mixture. This material mixture was dried at 100°C, and compress-molded using a predetermined die in a hydraulic press machine, whereby a positive electrode was produced. A battery including this positive electrode was fabricated in the same manner as in Example 1.

### «Example 3»

A battery was fabricated in the same manner as in Example 1 except that Li₄Ti₅O₁₂ having a mean particle size of 10 µm (LT-1, available from Titan Kogyo, Ltd.) was used in place of the lithium vanadate.

### <<Example 4»

A battery was fabricated in the same manner as in Example 1 except that γ-BL containing 1 mol/L LiCF₃SO₃ was used as the organic electrolyte in place of the γ-BL containing 1 mol/L LiBF₄.

### <<Example 5»

A battery was fabricated in the same manner as in Example 1 except that a mixed solvent of PC and DME (volume ratio 3:1) containing 1 mol/L LiCF₃SO₃ was used as the organic electrolyte in place of the γ-BL containing 1 mol/L LiBF₄.

### <<Example 6»

A battery was fabricated in the same manner as in Example 1 except that a mixed solvent of PC and DME (volume ratio 3:1) containing 1 mol/L LiBF₄ was used as the organic - electrolyte in place of the γ-BL containing 1 mol/L LiBF₄.

### <<Examples 7 to 12»

Batteries were fabricated in the same manner as in Example 3 except that the content of the lithium titanate in the positive electrode was changed to 0.1, 0.5, 20, 40, 50 or 60 parts by weight per 100 parts by weight of the graphite fluoride.

With respect to the batteries of Examples 1 to 12 and Comparative Examples 1 to 3, the following evaluation was performed.

### [Evaluation]

### (1) Constant-Resistance Discharge Test

Each battery was subjected to preliminary discharge at a constant current of 5 mA for 30 minutes, and then aged for 1 day at 60°C to stabilize the open circuit voltage. Thereafter, the static characteristics (e.g., open circuit voltage and internal resistance) were measured at room temperature to confirm that no abnormality was found in any of the batteries.

Next, the battery was discharged at a constant resistance of 15 kO in a 25°C environment until the closed circuit voltage reached 2 V, and the discharge capacity was measured. The number of batteries tested per each example was three.

### (2) Low-temperature Pulse Discharge Test

In order to evaluate the large-current discharge characteristics at low temperature, each battery was subjected to pulse discharge in a -40°C environment, the pulse discharge being performed by repeating an operation of discharging a battery at a constant current of 10 mA for 1 second and then allowing the battery to stand for 59 seconds, to a total of 30 times. The minimum discharge voltage of the battery during this pulse discharge (i.e., lowest voltage in low-temperature pulse discharge) was obtained. The number of batteries tested per each example was three.

### (3) Evaluation of High-Temperature Storage Characteristics

Each battery was stored at 100°C for 5 days. With respect to the battery after the storage at high temperature, the same constant-resistance discharge test and low-temperature pulse discharge test as described above were performed. The number of batteries tested per each example was four, among which two were subjected to the constant-resistance discharge test and the other two were subjected to the low-temperature pulse discharge test.
The evaluation results are shown in Tables 1 and 2. Table 1 shows the results of the constant-resistance discharge test and the low-temperature pulse discharge test in the early stage. Table 2 shows the results of the constant-resistance discharge test and the low-temperature pulse discharge test after the storage at high temperature.

**[Table 1]**

| | Metal oxide | Content of metal oxide in positive electrode | Electrolyte | | Early stage | |
|---|---|---|---|---|---|---|
| | | | Solvent | Salt | Discharge capacity | Lowest voltage in low-temperature pulse discharge (V) |
| | | (part by weight) | | | (mAh) | |
| Example 1 | LiV₂O₄ | 10 | γ-BL | LiBF₄ | 112 | 2.148 |
| Example 2 | LiV₂O₄ | 10 | γ-BL | LiBF₄ | 112 | 2.243 |
| Example 3 | Li₄Ti₅O₁₂ | 10 | γ-BL | LiBF₄ | 112 | 2.250 |
| Example 4 | LiV₂O₄ | 10 | γ-BL | LiCF₃SO₃ | 111 | 2.130 |
| Example 5 | LiV₂O₄ | 10 | PC + DME | LiCF₃SO₃ | 110 | 2.126 |
| Example 6 | LiV₂O₄ | 10 | PC + DME | LiBF₄ | 112 | 2.134 |
| Example 7 | Li₄Ti₅O₁₂ | 0.1 | γ-BL | LiBF₄ | 114 | 2.129 |
| Example 8 | Li₄Ti₅O₁₂ | 0.5 | γ-BL | LiBF₄ | 114 | 2.135 |
| Examples 9 | Li₄Ti₅O₁₂ | 20 | γ-BL | LiBF₄ | 111 | 2.263 |
| Example 10 | Li₄Ti₅O₁₂ | 40 | γ-BL | LiBF₄ | 110 | 2.224 |
| Example 11 | Li₄Ti₅O₁₂ | 50 | γ-BL | LiBF₄ | 109 | 2.156 |
| Example 12 | Li₄Ti₅O₁₂ | 60 | γ-BL | LiBF₄ | 108 | 2.130 |
| Comparative Example 1 | Without | - | γ-BL | LiBF₄ | 114 | 2.125 |
| Comparative Example 2 | V₂O₅ | 10 | γ-BL | LiBF₄ | 112 | 2.120 |
| Comparative Example 3 | TiO₂ | 10 | γ-BL | LiBF₄ | 111 | 2.117 |

**[Table 2]**

| | After storage at high temperature | |
|---|---|---|
| | Discharge capacity (mAh) | Lowest voltage in low-temperature pulse discharge (V) |
| Example 1 | 108 | 1.803 |
| Example 2 | 108 | 1.914 |
| Example 3 | 109 | 1.982 |
| Example 4 | 97 | 1.784 |
| Example 5 | 96 | 1.674 |
| Example 6 | 98 | 1.804 |
| Example 7 | 108 | 1.775 |
| Example 8 | 108 | 1.782 |
| Example 9 | 109 | 2.052 |
| Example 10 | 107 | 1.916 |
| Example 11 | 106 | 1.801 |
| Example 12 | 104 | 1.761 |
| Comparative Example 1 | 108 | 1.774 |
| Comparative Example 2 | 106 | 1.685 |
| Comparative Example 3 | 108 | 1.743 |

As is evident from Table 1, in the batteries of Examples 1 to 12 of the present invention, the lowest voltages in the low-temperature pulse discharge were higher than that in the battery of Comparative Example 1, and the large-current discharge characteristics at low temperature in the early stage were improved.
The batteries of Comparative Examples 2 and 3 exhibited a discharge voltage higher than the battery of Comparative Example 1, in the early stage of the low-temperature pulse discharge. However, in the batteries of Comparative Examples 2 and 3, the effect of improving the discharge voltage was reduced after the passage of several hundred hours, resulting in smaller lowest voltages in the low-temperature pulse discharge than those in Examples 1 to 12.

As is evident from Table 2, in the batteries of Examples 1 to 4 and Examples 6 to 11, the lowest voltages in the low-temperature pulse discharge after the storage at high temperature were higher than that in the battery of Comparative Example 1, and excellent high-temperature storage characteristics were obtained.
In the battery of Example 2, which was subjected to mechanochemical processing, both in the early stage and after the storage at high temperature, the low-temperature pulse discharge characteristics were better than those in the battery of Example 1, which was not subjected to mechanochemical processing.

In the battery of Example 3, in which lithium titanate was added into the positive electrode, the drop in voltage during the low-temperature pulse discharge after the storage at high temperature was remarkably suppressed as compared to in the battery of Comparative Example 1, indicating that the high-temperature storage characteristics were significantly improved by using lithium titanate.
In the batteries of Examples 8 to 11, in which the content of lithium titanate in the positive electrode was within a range of 0.5 to 50 parts by weight per 100 parts by weight of the graphite fluoride, the effect of improving the voltage in the low-temperature pulse discharge after the storage at high temperature was evident. In the batteries of Examples 7 and 12, in which the contents of the lithium titanate in the positive electrode were less than 0.5 parts by weight or more than 50 parts by weight per 100 parts by weight of the graphite fluoride, the lowest voltages in the low-temperature pulse discharge were approximately equal to those in the batteries of Comparative Examples 1 to 3. Accordingly, it is understood that in terms of the achieving better low-temperature pulse discharge characteristics after the storage at high temperature, the content of the metal oxide in the positive electrode is preferably within a range of 0.5 to 50 parts by weight per 100 parts by weight of the graphite fluoride.

Further comparison between Example 1 and Examples 4 to 6, in which different electrolytes were used, revealed that the battery of Example 1 was superior to the batteries of Examples 4 to 6 in the high-temperature storage characteristics, and the deterioration of the battery during the storage at high temperature was less severe. This indicates that in view of obtaining a battery excellent in stability during storage at high temperature, the salt of the electrolyte is preferably LiBF₄, and the solvent of the electrolyte is preferably γ-BL.

### Industrial Applicability

The lithium primary battery of the present invention is excellent in large-current discharge characteristics in a low temperature environment and high-temperature storage characteristics, and is suitably used as a power source for electronic devices and the like.

## Claims

1. A lithium primary battery comprising a positive electrode including a fluoride as a positive electrode active material, a negative electrode including metallic lithium or a lithium alloy as a negative electrode active material, a separator interposed between said positive electrode and said negative electrode, and an electrolyte comprising an organic solvent and a salt dissolved in said organic solvent,
**characterized in that**
said positive electrode further includes a metal oxide being capable of absorbing and desorbing lithium ions, having a spinel structure, and having a discharge potential versus lithium lower than that of said fluoride;
said metal oxide includes at least one selected from the group consisting of Ti, V, Al, Mn, Fe, Co, and Ni;
the content of said metal oxide in said positive electrode is 0.5 to 50 parts by weight per 100 parts by weight of said fluoride;
said fluoride is graphite fluoride or a graphite fluoride intercalation compound.

2. The lithium primary battery in accordance with claim 1, wherein said metal oxide is at least one selected from the group consisting of lithium titanate and lithium vanadate.

3. The lithium primary battery in accordance with claim 1, wherein said metal oxide is at least one selected from the group consisting of Li₄Ti₅O₁₂ and LiV₂O₄.

4. The lithium primary battery in accordance with claim 1, wherein a composite material of said fluoride and said metal oxide is formed.

5. The lithium primary battery in accordance with claim 1, wherein
said organic solvent is at least γ-butyrolactone, and said salt is lithium tetrafluoroborate.

## Patentansprüche

1. Lithiumprimärbatterie, umfassend eine ein Fluorid als ein Positivelektrodenmaterial beinhaltende Positivelektrode, eine metallisches Lithium oder eine Lithiumlegierung als ein Negativelektrodenaktivmaterial beinhaltende Negativelektrode, einen zwischen der Positivelektrode und der Negativelektrode angeordneten Separator, und ein ein organisches Lösungsmittel und ein gelöstes Salz in dem organischen Lösungsmittel umfassendes Elektrolyt,
**dadurch gekennzeichnet, dass**
die Positivelektrode ferner ein Metalloxid, das in der Lage ist, Lithiumionen zu absorbieren und zu desorbieren, mit einer Spinellstruktur und mit einem Entladungspotenzial gegen Lithium, welches niedriger als das des Fluorides ist, beinhaltet;
das Metalloxid mindestens eines aus der Gruppe, bestehend aus Ti, V, Al, Mn, Fe, Co, und Ni beinhaltet;
der Gehalt des Metalloxids in der Positivelektrode 0,5 bis 50 Gew.-% pro 100 Gew.-% des Fluorides ist;
das Fluorid Graphitfluorid oder eine Graphitfluorid interkalierte Verbindung ist.

2. Lithiumprimärbatterie nach Anspruch 1, wobei das Metalloxid mindestens eines aus der aus Lithiumtitanat und Lithiumvanadat bestehenden Gruppe ausgewählt ist.

3. Lithiumprimärbatterie nach Anspruch 1, wobei das Metalloxid mindestens eines aus der aus Li₄Ti₅O₁₂ und LiV₂O₄ bestehenden Gruppe ausgewählt ist.

4. Lithiumprimärbatterie nach Anspruch 1, wobei ein Kompositmaterial des Fluorides und des Metalloxides gebildet ist.

5. Lithiumprimärbatterie nach Anspruch 1, wobei
das organische Lösungsmittel zumindest γ-Butyrolacton ist, und
das Salz Lithiumtetrafluoroborat ist.

## Revendications

1. Batterie principale au lithium comprenant une électrode positive contenant un fluorure comme matériau actif d'électrode positive, une électrode négative contenant du lithium métallique ou un alliage de lithium comme matériau actif d'électrode négative, un séparateur interposé entre ladite électrode positive et ladite électrode négative, et un électrolyte comprenant un solvant organique et un sel dissous dans ledit solvant organique,
**caractérisée en ce que**
ladite électrode positive comprend en outre un oxyde métallique qui est capable d'absorber et désorber des ions lithium, ayant une structure en spinelle, et ayant un potentiel de décharge par rapport au lithium inférieur à celui dudit fluorure ;
ledit oxyde métallique comprend au mois un sélectionné du groupe composé de Ti, V, Al, Mn, Fe, Co, et Ni ;
le contenu dudit oxyde métallique dans ladite électrode positive est de 0,5 à 50 parties en poids pour 100 parties en poids dudit fluorure ;
ledit fluorure est un fluorure de graphite ou un composé d'intercalation de fluorure de graphite.

2. Batterie principale au lithium selon la revendication 1, où ledit oxyde métallique est au moins un élément sélectionné du groupe composé de titanate de lithium et de vanadate de lithium.

3. Batterie principale au lithium selon la revendication 1, où ledit oxyde métallique est au moins un élément sélectionné du groupe composé de Li₄Ti₅O₁₂ et de LiV₂O₄.

4. Batterie principale au lithium selon la revendication 1, où un matériau composite dudit fluorure et dudit oxyde métallique est formé.

5. Batterie principale au lithium selon la revendication 1, où
ledit solvant organique est au moins une γ-butyrolactone, et ledit sel est du tétrafluoroborate de lithium.
